(19) Europäisches Patentamt
European Patent Office
Office européen des brevets

(11) Veröffentlichungsnummer: **0 188 753**
**B1**

(12) # EUROPÄISCHE PATENTSCHRIFT

(45) Veröffentlichungstag der Patentschrift: **16.05.90**

(51) Int. Cl.$^5$: **C 08 J 7/04**, C 08 J 5/18, C 08 K 5/19, G 03 C 1/85

(21) Anmeldenummer: **85116043.2**

(22) Anmeldetag: **16.12.85**

(54) **Folie mit antistatischem Überzug.**

(30) Priorität: **18.12.84 US 683435**

(43) Veröffentlichungstag der Anmeldung:
**30.07.86 Patentblatt 86/31**

(45) Bekanntmachung des Hinweises auf die Patenterteilung:
**16.05.90 Patentblatt 90/20**

(84) Benannte Vertragsstaaten:
**DE FR GB LU NL**

(56) Entgegenhaltungen:
**DE-A-2 128 803**
**GB-A-1 079 402**
**GB-A-1 268 780**
**US-A-3 954 633**
**US-A-4 214 035**

(73) Patentinhaber: **HOECHST CELANESE CORPORATION**
**Route 202-206 North**
**Somerville, N.J. 08876 (US)**

(72) Erfinder: **Culbertson, Edwin C.**
**107 Saratoga Drive**
**Greer South Carolina 29651 (US)**

(74) Vertreter: **Euler, Kurt Emil, Dr.**
**HOECHST AG - Werk KALLE Patentabteilung**
**Postfach 3540 Rheingaustrasse 190**
**D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 188 753 B1

**Beschreibung**

Die vorliegende Erfindung betrifft eine selbsttragende streckorientierte Folie aus thermoplastischem Kunststoff mit einem dünnen, durchgehenden, antistatischen Überzug auf einer Seite oder auf beiden Seiten sowie ein Verfahren zur Herstellung dieser Folie.

Durch den steigenden Bedarf an Verpackungsmaterialien, reprografischen Materialien, Mikrofilmen und Magnetbändern hat der Einsatz von Kunststoffolien, insbesondere biaxial streckorientierten Kunststoffolien aus Polyethylen, Polypropylen, Nylon, Polyester, Polystyrol und Polycarbonat, auf diesen Gebieten erheblich zugenommen. Eines der Probleme bei der Verwendung dieser Folien besteht darin, daß sie dazu neigen, sich als Folge der bei der Handhabung bzw. Verarbeitung auftretenden Reibung, insbesondere bei geringer Luftfeuchtigkeit, an ihrer Oberfläche elektrostatisch aufzuladen. Diese elektrostatische Aufladung zieht nicht nur Verschmutzungen wie Staub und andere Partikelchen an, sondern auch andere Folien. Bei Trägern aus Polyesterfolie zum Beispiel können elektrostatische Aufladungen beim Mischen, Sortieren und Entwickeln von Mikrofichekarten oder anderen transparenten Trägern stören und zum Zusammenkleben dieser Karten führen.

Zur Lösung dieses Problems hat man antistatische Folien entwickelt. Bei der Herstellung solcher antistatischer Folien wird gewöhnlich ein antistatischer Überzug auf die Folienoberfläche aufgebracht. Mit vielen dieser Überzüge gelingt es, das elektrostatische Verhalten der Folie auf ein ausreichend niedriges Maß zu reduzieren, allerdings können die Überzüge häufig zum Blocken führen, d.h. die mit einer antistatischen Schicht versehene Folie hat einen so hohen Reibungskoeffizienten, daß einzelne Folienlagen nicht übereinander oder über Rollen oder andere Vorrichtungsteile gleiten, über die die Folie während des Betriebs läuft, sondern daran hängenbleiben.

Darüber hinaus ergibt sich durch das antistatische Beschichten der Folienoberfläche das Problem der verminderten Transparenz. Diese Eigenschaft, die allgemein als Trübung bezeichnet wird, spielt bei der Anwendung in Mikrofilmen eine sehr große Rolle. Ein Mikrofilm muß leserlich sein, wenn der Film mit Licht durchstrahlt wird, so daß der Betrachter die auf den Film aufgedruckten Informationen lesen kann. Eine schlechte Transparenz führt durch den Verlust an Lichtstärke zu Unschärfe und zu Schwierigkeiten beim Lesen.

Ein drittes Problem im Zusammenhang mit dem Aufbringen eines antistatischen Überzugs ist dessen Fähigkeit, dauerhaft an der Folienoberfläche zu haften, insbesondere wenn die Folie später bedruckt oder mit Beschichtungsmassen behandelt wird.

Für den Folienhersteller ist es auch wichtig, daß sich bei der Folienherstellung entstandener Abfall zur Rückführung in den Produktionsprozeß eignet. Jede während der Herstellung aufgebrachte Beschichtung befindet sich als Verunreinigung auf dem Folienabfall und kann wegen der bei der Folienherstellung herrschenden hohen Temperaturen bei der Wiederverarbeitung zu einer Verfärbung führen.

Aus dem Stand der Technik sind verschiedene antistatische Überzüge bekannt. Gemäß US—A—4 214 035 wird zum Beispiel auf eine Polyesterfolie ein antistatischer Überzug auf der Basis einer Mischung aus Stearamidopropyldimethyl-beta-hydroxy-ethylammoniumnitrat und einem vernetzbaren Acrylterpolymeren als Bindemittel aufgebracht, das Mengenverhältnis der beiden Mischungskomponenten beträgt etwa 3:1. Dieser antistatische Überzug verbessert zwar die antistatischen Eigenschaften der Folie, der verhältnismäßig hohe Anteil an antistatischer Verbindung gegenüber Bindemittel macht den Überzug jedoch relativ teuer. Außerdem zeigt das von einer solchen Folie gewonnene Regenerat bei der Wiederverarbeitung zu neuer Folie eine Verfärbung, die insbesondere dann unerwünscht ist, wenn die Folie für reprografische Zwecke eingesetzt werden soll. Schließlich läßt sich die antistatische Oberfläche dieser Folie, insbesondere bei reprografischen Anwendungen, nicht ohne weiteres mit zusätzlichen Beschichtungen versehen.

In GB—A—1 558 064 ist die Verwendung bestimmter quartärer Ammoniumsalze in antistatischen Überzügen für Polyolefinfolie, z.B. aus Polypropylen, beschrieben. Diese Salze haben die Formel

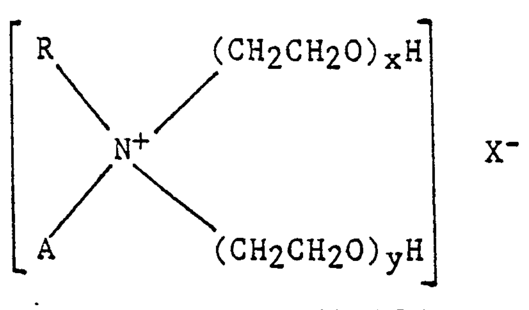

worin A ein niederes Alkyl, R einen aliphatischen Rest mit 1 bis 22 C-Atomen, x und y ganze Zahlen mit der Summe 2 bis 5 und $X^-$ ein Anion bedeuten. Abgesehen von seiner Wirksamkeit als antistatikum löst dieses in GB—A—1 558 064 beschriebene Material bei seiner Anwendung nicht das Problem der mangelnden Haftung von zusätzlichen Beschichtungen, die über dem antistatischen Überzug aufgebracht werden.

Der vorliegenden Erfindung lag daher die Aufgabe zugrunde, eine Kunststoffolie zu schaffen mit sehr guten antistatischen Eigenschaften, die darüber hinaus gleichzeitig auch noch gute Gleiteigenschaften

aufweist, d.h. die nicht zum Blocken neigt, und die sich außerdem durch sehr gute Transparenz auszeichnet. Ferner soll ein Verfahren zur Herstellung dieser Folie angegeben werden, mit der fortschrittliche Verbesserungen beim Einsatz von Polyesterfolien auf dem Reprografiesektor erzielt werden können. Der antistatische Überzug auf der Folie soll außer seinen antistatischen Eigenschaften auch noch als Grundier- und Haftvermittlerschicht für das Auftragen von weiteren Beschichtungen geeignet sein, und der bei der Folienherstellung im Werk anfallende Folienverschnitt soll ohne Probleme als Regenerat in den Produktionsprozeß zurückzuführen sein.

Die Aufgabe der Erfindung wird gelöst durch eine selbsttragende streckorientierte Folie aus thermoplastischem Kunststoff mit einem dünnen, durchgehenden, antistatischen Überzug auf einer Seite oder auf beiden Seiten, deren Kennzeichenmerkmale darin bestehen, daß Überzug aus einer Mischung zusammengesetzt ist enthaltend

a) ein quartäres Ammoniumsalz mit der allgemeinen Strukturformel

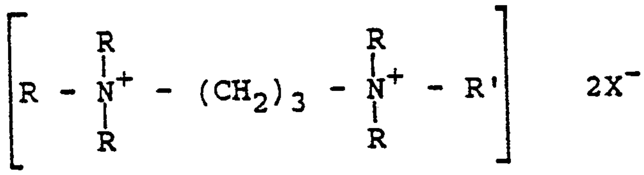

in der

R Reste einer niedermolekularen Alkylgruppe mit 1 bis 3 C-Atomen bedeutet,

R′ eine Alkyl- oder Alkenylgruppe mit 8 bis 20 C-Atomen bedeutet und

$X^-$ ein Anion ist, und

b) ein polymeres acrylisches oder methacrylisches Bindemittel

und daß der Oberflächenwiderstand der Folie $10^{13}\Omega$ nicht überschreitet.

Das quartäre Ammoniumsalz (QAS) und das polymere Bindemittel können in verhältnismäßigen Anteilen von 10 bis 80 Gew.-% QAS und 90 bis 20 Gew.-% polymeres Bindemittel, jeweils bezogen auf das Gesamtgewicht des trockenen Überzugs, in der Mischung anwesend sein, wobei der Anteil an QAS vorzugsweise 25 bis 75 Gew.-% beträgt.

Basisfolien, die sich für die vorliegende Erfindung eignen, sind zum Beispiel Folien aus Polyester, Polyolefinen wie Polyethylen oder Polypropylen, Nylon (Polyamid), Polystyrol und Polycarbonat. Insbesondere geeignet sind Folien auf Basis eines kristallisierbaren Polyesters aus der Polykondensation eines Glykols, z.B. Ethylenglykol oder Butandiol bzw. Gemischen von diesen, mit Terephthalsäure oder Mischungen von Terephthalsäure und anderen Dicarbonsäuren wie z.B. Isophthalsäure, Diphensäure und Sebacinsäure oder deren polyesterbildenden Äquivalenten. Solche Polyester werden nach bekannten Verfahren hergestellt. Die bevorzugte Basisfolie besteht aus Polyethylenterephthalat.

Bei der antistatischen Masse handelt es sich um eine Mischung aus einer quartären Ammoniumsalzverbindung mit der genannten Formel und einem polymeren acrylischen oder methacrylischen Bindemittel. In der bevorzugten Ausführung kann der Substituent R durchweg gleich oder verschieden sein und ist vorzugsweise eine Methyl- oder Ethylgruppe. R′ ist ein Rest von gesättigten Säuren mit 14 bis 18 C-Atomen, von einfach ungesättigten Säuren oder zweifach ungesättigten Säuren, wie sie z.B. in Tierfett (Talg) enthalten sind, und X ist ein Chloranion, ein niedermolekulares Alkylsulfat oder ein Tosylat. Das am meisten bevorzugte quartäre Ammoniumsalz ist N,N,N,N′,N′-Pentamethyl-N′-Talgrest-trimethylendiammonium-bis(methylsulfat) mit der Formel

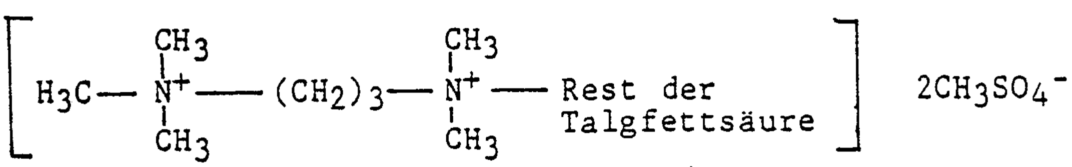

Diese Verbindungen und Verfahren zu ihrer Herstellung sind in US—A—3 954 633 beschrieben, woraus auch bekannt ist, daß die Verbindungen als Gleitmittel und Antistatika bei der Verarbeitung von natürlichen und synthetischen Fasern geeignet sind.

Erfindungsgemäß verwendete polymere acrylische oder methacrylische Bindemittel (Mischungskomponente b) sind zum Beispiel Acryl- oder Methacrylpolymere wie Polymethylmethacrylat, Copolymere von Methylmethacrylat mit Acrylaten wie Ethylacrylat oder Butylacrylat und Terpolymere von Methylmethacrylat, Ethylacrylat und entweder Acrylamid oder Methacrylamid oder entweder N-Methylolacrylamid oder N-Methylolmethacrylamid. In vielen Fällen sollte das polymere Bindemittel vernetzbar sein, was dadurch zu erreichen ist, daß man bis zu etwa 10 Mol-% eines "selbstvernetzenden" mehrfunktionellen Comonomeren wie z.B. N-Methylolacrylamid im Bindemittel verwendet oder dem Bindemittel eine geeignete Menge eines Vernetzungsmittels wie z.B. ein Melamin-Formaldehyd- oder Harnstoff-Formaldehydkondensat zusetzt, das zur Reaktion mit einer in der Polymerkette enthaltenen funktionellen Gruppe wie z.B. Amido-, Carboxyl-, Epoxy- oder Hydroxylgruppe befähigt ist. Weitere erfindungsgemäße polymere acrylische oder methacrylische Bindemittel umfassen Copolymere aus Vinylidenchlorid, Acrylester und Itaconsäure, so wie sie ü.a. in US—A—2 698 240 beschrieben sind. Es können auch vernetzbare

Arten dieser Stoffe verwendet werden. Die erfindungsgemäß bevorzugten Bindemittel sind die vernetzbaren Acrylpolymere, insbesondere Acrylterpolymere auf der Basis von 39 bis 70 Mol-% Methylmethacrylat, 60 bis 29 Mol-% Ethylacrylat und 1 bis 10 Mol-% Acrylamid, Methacrylamid oder N-Methylolacrylamid. Die Acrylpolymere bieten das beste Gleichgewicht zwischen antistatischen Eigenschaften, guter Transparenz, Gleitfähigkeit und Fähigkeit zur Rückführung des Folienverschnitts als Regenerat in den Produktionsprozeß.

Der antistatische Überzug kann 15 bis 75 Gew.-% der quartären Ammoniumsalzverbindung (QAS) und dementsprechend 85 bis 25 Gew.-% polymeres Bindemittel, bezogen auf das Gesamtgewicht des trockenen Überzuges, enthalten. Das entspricht in etwa einem Bereich der verhältnismäßig Anteile von 3 bis 1 Teil QAS-Verbindung auf 1 bis 5 Teile polymeres Bindemittel. Es hat sich überraschenderweise gezeigt, daß bei Verwendung der Acrylbindemittel die Polyesterfolie schon bei einem Verhältnis von nur 1 Teil der QAS-Verbindung zu 3,75 Teilen Bindemittel gute antistatische Eigenschaften aufweist, vergleichbar mit den Eigenschaften, die eine Folie erhält, wenn antistatische Nitrate, wie sie aus US—A 4 214 035 bekannt sind, im Verhältnis 3 Teile Nitrat zu 1 Teil Bindemittel verwendet werden. Bei Verwendung von höheren Anteilen an QAS-Verbindung, z.B. im Verhältnis von etwa 1:1 bis etwa 3:1, ergeben sich noch vorteilhaftere Eigenschaften. Das bevorzugte Verhältnis QAS-Verbindung/Bindemittel beträgt etwa 25 bis 75 Gew.-% QAS-Verbindung zu etwa 75 bis 25 Gew.-% Bindemittel.

Der erfindungsgemäße antistatische Überzug kann in Form einer wäßrigen Dispersion mit einem Feststoffgehalt von etwa 0,5 bis 15%, vorzugsweise von etwa 1 bis 8%, auf die Basisfolie aufgebracht werden. Der Feststoffgehalt ist vorzugsweise so bemessen, daß sich eine Trockenschichtdicke von 2,54 nm bis 254 nm ergibt, auf das Gewicht bezogen entspricht das einem Feststoffgehalt von 0,00305 $g/m^2$ bis 0,305 $g/m^2$. Der trockene Überzug hat bevorzugt eine Dicke im Bereich von etwa 2,54 nm bis 76,2 nm.

Der antistatische Überzug kann auf eine oder beide Seiten der Folie aufgetragen werden. Er kann auch auf eine Folienseite aufgebracht werden, während sich auf der Gegenseite eine andere Beschichtung, z.B. eine hitzehärtbare Acryl- oder Methacrylbeschichtung, befindet, wie beispielsweise in US—A—4 214 035 beschrieben. Der Beschichtungsansatz kann noch weitere bekannte Zusätze enthalten wie z.B. Netzmittel, Tenside, pH-Regulatoren, Antioxidantien, Farbstoffe, Pigmente, Gleitmittel wie kolloidales $SiO_2$, und dergleichen. Die Verwendung von Zusatzstoffen oder polymeren Bindemitteln, die zu Ionenaustauschreaktionen mit der quartären Ammoniumverbindung führen, muß vermieden werden.

Die erfindungsgemäßen antistatischen Überzuge weisen überraschenderweise eine ausgezeichnete thermische Stabilität auf. Während der Folienherstellung angefallenes Verschnittmaterial einer mit Überzug versehenen Polyesterfolie kann problemlos als Regenerat mit frischem Polyester vermischt, wiederaufgeschmolzen, erneut dem Folienextruder zugeführt und zu Streckorientierter Folie verarbeitet werden. Eine so hergestellte Folie mit einem Gehalt von bis zu 50 Gew.-% an beschichtetem Regenerat (das ein thermisch stabiles Bindemittel, z.B. ein Acrylpolymeres, enthält) steht in Bezug auf Qualität, Farbe und Aussehen einer nicht mit Regenerat hergestellten Folie kaum meßbar nach. Verglichen mit vielen anderen antistatischen Folien wie z.B. den aus US—A—4 214 035 bekannten Folien, die in stärkerem Maße zum Polymerenabbau und zu Verfärbungen neigen, wenn sie wie oben beschrieben in den Produktionsprozeß zurückgeführt werden, kann daher die erfindungsgemäße Folie mit (antistatischem) Überzug dem Folienhersteller einen deutlichen wirtschaftlichen Vorteil bieten.

Da in der Beschichtungsmasse höhere Bindemittelgehalte, bezogen auf die Menge an QAS, verwendet werden können und dabei trotzdem gute antistatische Eigenschaften erhalten bleiben, ist bei einer mit der antistatischen Masse versehenen Folie das Aufbringen weiterer Beschichtungen möglich. Mit der erfindungsgemäßen antistatischen Masse beschichtete Polyesterfolien, die als Bindemittel ein vernetzbares Acrylpolymeres in einem Anteil von mindestens etwa 50 Gew.-%, vorzugsweise mindestens 65 Gew.-%, enthalten, eignen sich besonders gut als Trägerfolien für die Herstellung von lichtempfindlichen reprografischen Folien. Dazu wird eine zusätzliche Beschichtung auf die Oberfläche des auf der Polyesterfolienoberfläche befindlichen antistatischen Überzugs aufgebracht und getrocknet. Die zusätzliche Beschichtung ist ein lichtempfindliches Gemisch aus einem in einem organischen Lösemittel gelösten Harz als Bindemittel, das eine lichtempfindliche Diazoniumverbindung enthält oder damit getränkt ist. Harze, die als Bindemittel für diesen Zweck geeignet sind, umfassen Celluloseacetobutyrat, Celluloseacetat, Celluloseacetatpropionat sowie Vinylpolymere, z.B. Polyvinylacetat. Zu den geeigneten Lösemitteln zählen Aceton, Methylethylketon, Methylisobutylketon, Ethylenglykolmonomethylether und deren Gemische. Diese reprografischen Beschichtungen, Verfahren zum Aufbringen der Beschichtungen und deren Gebrauch sind aus dem Stand der Technik bekannt, wo sie in Verbindung mit anderen Trägerfolien verwendet werden.

Die erfindungsgemäße antistatisch beschichtete Folie stellt ferner eine ausgezeichnete Unterlage für das Aufbringen von mattierenden Beschichtungen dar, wodurch die Folie als Zeichenmaterial geeignet wird. Diese mattierenden Beschichtungen können auf einem Harz als Bindemittel und feinteiligen partikelförmigen Materialien als "Körnungsmittel" basieren, die in einem organischen Lösemittel gelöst sind. Die Bindemittel können aus den genannten Harzen sowie aus Acryl- oder Methacrylharzen bestehen. Als organische Lösemittel können gleichfalls die obengenannten Lösemittel verwendet werden. Partikelförmige Materialien umfassen feinteilige (weniger als 10 µm Teilchengröße) Tone oder $SiO_2$. In den Ansätzen für die mattierenden Beschichtungen können noch andere Bestandteile wie z.B. Verdickungsmittel oder Dispergierhilfsmittel enthalten sein.

Ferner kann die erfindungsgemäße antistatisch beschichtete Folie noch als Verpackungs- oder Etikettierungsmaterial verwendet werden. Die beschichteten Folien zeigen im Vergleich zu unbeschichteter Folie eine verbesserte Haftung gegenüber Druckfarben.

Die im vorstehenden in allen Einzelheiten beschriebene Folie kann nach bekannten Verfahren und mit bekannten Vorrichtungen hergestellt werden. Zum Beispiel wird eine Polyesterschmelze hergestellt und zu einer amorphen Folie auf eine polierte rotierende Gießtrommel extrudiert, wo sich eine Vorfolie aus dem Polymeren ausbildet. Anschließend wird die Folie streckorientiert, und zwar bei einer monoaxial orientierten Folie lediglich in einer Richtung, d.h. entweder in Extrusionsrichtung (längs) oder senkrecht zur Extrusionsrichtung (quer), und bei einer biaxial orientierten Folie in zwei Richtungen, d.h. sowohl in Längs- als auch in Querrichtung. Der erste an der amorphen Vorfolie durchgeführte Streckschritt kann beliebig in einer der beiden rechtwinklig zueinander verlaufenden Richtungen erfolgen. Um der Folie Festigkeit und Zähigkeit zu verleihen, wird etwa um das 3,0- bis 5,0fache der ursprünglichen Abmessungen der amorphen Vorfolie in einer oder beiden Richtungen gestreckt. Der Verstreckungsgrad liegt vorzugsweise etwa zwischen dem 3,2- und 4,2fachen der ursprünglichen Abmessungen.

Während der Streckschritte liegen die Temperaturen im Bereich zwischen der Glasübergangstemperatur bis unterhalb der Temperatur, bei der das Polymere weich wird und schmilzt.

Gegebenenfalls wird nach dem Strecken für die zur Kristallisation der Polyesterfolie erforderliche Dauer wärmebehandelt. Durch die Kristallisation werden die mechanischen und thermischen Eigenschaften, die Dimensionsstabilität, der Folie fixiert. Polyethylenterephthalat wird z.B. bei einer Temperatur im Bereich von etwa 190°C bis 240°C, vorzugsweise von etwa 215°C bis 235°C, wärmebehandelt. Die Behandlungsdauer liegt im Bereich von 2 bis 40 s.

Die erfindungsgemäße antistatische Überzugsmasse in Form einer wäßrigen Dispersion kann prinzipiell in jedem Stadium während der Folienherstellung auf die Folie aufgebracht werden, vorzugsweise wird sie während einer der folgenden zwei Stufen der Folienherstellung in-line aufgebracht: der dem Strecken vorausgehenden Stufe, d.h. zwischen dem Gießen der amorphen Folie und dem ersten Streckschritt, wie es z.B. in GB—A—1 411 564 beschrieben ist, oder der Streckzwischenstufe, d.h. nach dem uniaxialen, aber vor dem biaxialen Strecken, z.B. gemäß US—A—4 214 035. Normalerweise ist die Wärme, mit der die Folie beim Strecken oder den abschließenden Konditionierstufen beaufschlagt wird, ausreichend, um das Wasser und andere flüchtige Bestandteile zu vertreiben und den Überzug zu trocknen. Für einige Anwendungen kann der Überzug auch auf die fertige Folie aufgebracht werden. Diese Auftragstechnik ist jedoch weniger bevorzugt, da die Haftung des Überzugs an der Folie dann nicht so gut ist wie die Haftung, die man beim In-line-Aufbringen erzielen kann.

In einer bevorzugten Ausführung wird der Überzug nach dem uniaxialen Strecken, d.h. nach dem Strecken der Folie in einer Richtung, jedoch vor dem Strecken in der rechtwinklig dazu verlaufenden Richtung, aufgebracht. In einer weiteren bevorzugten Ausführung wird die Polyesterfolie vor dem Beschichten zunächst in Längsrichtung gestreckt. In dieser bevorzugten Ausführung wird die Folie nach dem Längsstrecken nach einem der bekannten Verfahren beschichtet. Das Beschichten kann z.B. mit Walzen, durch Aufsprühen, mit Schlitzdüsen oder durch Tauchen erfolgen. In einer bevorzugten Ausführung wird die Polyesterfolie mit Gravurwalzen beschichtet. Ferner wird die uniaxial gestreckte Folie vorzugsweise vor dem Beschichten mit einem Corona-Entladegerät coronabehaldelt. Die Coronabehandlung erhöht die Polarität der Polyesterfolienoberfläche, wodurch die Beschichtung auf wäßriger Basis die Oberfläche leichter benetzen kann und somit die Haftung des Überzugs an der Oberfläche verbessert wird.

Die erfindungsgemäße nach dem vorstehenden Verfahren hergestellte Folie besitzt hervorragende antistatische Eigenschaften, eine sehr gute Transparenz und Gleiteigenschaften, und es besteht die Möglichkeit, die Folie als Regenerat in den Produktionsprozeß zurückzuführen. Bei höheren Bindemittelgehalten werden ferner gute Haftvermittlereigenschaften beobachtet, die die Folie für das Aufbringen weiterer Beschichtungen geeignet machen.

Die Erfindung wird in den folgenden Beispielen noch näher erläutert.

## Beispiel 1

Es wurde eine wäßrige Dispersion der antistatischen Beschichtungsmasse hergestellt, indem man eine wäßrige Dispersion aus N,N,N,N',N'-pentamethyl-N'-Talgrest-trimethylendiammonium-bis(methylsulfat) mit einem polymeren Latex auf der Basis eines vernetzbaren Terpolymeren aus Methylmethacrylat, Ethylacrylat und Methacrylamid, der auch eine ausreichende Menge eines Melamin/Formaldehydkondensats zur Vernetzung des Polymeren beim Beaufschlagen mit Wärme enthielt, intensiv vermischte. Die Komponenten wurden so gemischt, daß sich, bezogen auf das Trockengewicht, ein Verhältnis quartäre Ammoniumsalzverbindung zu Polymeren von etwa 1,3:1 ergab. Die Dispersion wurde mit Wasser auf einen Feststoffgehalt von 4 Gew.-% verdünnt.

Die oben beschriebene Dispersion wurde auf eine Seite einer Polyesterfolie aufgebracht, und zwar wie folgt:

Es wurde eine Schmelze aus Polyethylenterephthalat hergestellt und durch eine Schlitzdüse auf eine auf etwa 20°C gehaltene Gießtrommel extrudiert. Die Schmelze erstarrte zur Vorfolie und wurde dann bei einer Temperatur von 80°C im Verhältnis von etwa 3,6:1 in Längsrichtung gestreckt.

Die längsgestreckte Folie wurde mit einem Coronaentladegerät behandelt und anschließend durch

Gravurbeschichten mit dem oben beschriebenen Latex beschichtet.

Die coronabehandelte, längsgestreckte und beschichtete Folie wurde bei einer Temperatur von etwa 100°C getrocknet. Danach wurde die Folie im Verhältnis 3,6:1 in Querrichtung gestreckt, so daß man eine biaxial streckorientierte Folie erhielt. Die biaxial streckorientierte Folie wurde bei 230°C hitzefixiert. Diese Wärmebehandlungen führten zur Vernetzung des Überzugs. Das Trockengewicht des Überzugs betrug etwa 0,035 $g/m^2$ bewi einer Dicke des Überzugs von etwa 25,4 nm und einer Dicke der Basisfolie von etwa 75 µm.

An der in Beispiel 1 hergestellten Folie wurde der Oberflächenwiderstand bei 50% relativer Luftfeuchtigkeit mit einem Elektrometer von Keithley Instruments (Modell 610B) bewertet. Der Widerstand kann auch nach ASTM Test D 257—66 gemessen werden. Eine Vergleichsprobe aus unbeschichteter ca. 75 µm dicker, biaxial streckorientierter Polyethylenterephthalatfolie wurde ebenfalls bewertet. Der Oberflächenwiderstand der Folie nach Beispiel 1 betrug $2 \times 10^9 \Omega$; die Vergleichsprobe hatte einen Oberflächenwiderstand von mehr als $10^{16} \Omega$.

Ein Oberflächenwiderstand von weniger als $10^{10} \Omega$ kennzeichnet eine Folie mit sehr guten antistatischen Eigenschaften, wogegen ein Oberflächenwiderstand von mehr als $10^{13} \Omega$ als allgemein unannehmbar gilt. Die gemäß dieser Erfindung erreichten bevorzugten Oberflächenwiderstände betragen höchstens etwa $10^{11} \Omega$.

## Beispiele 2 bis 28

Es wurden dreiundzwanzig Folien mit (antistatischem) Überzug wie in Beispiel 1 hergestellt, mit dem Unterschied, daß die jeweiligen Feststoffgehalte für jede Komponente des Überzugs so eingestellt wurden, daß sich innerhalb des Bereichs von etwa 1,3:1 bis etwa 1:3,75 unterschiedliche Verhältnisse quartäre Ammoniumsalzverbindung (in der Tabelle mit Q bezeichnet) zu Acrylpolymerem (in der Tabelle mit A bezeichnet) ergaben. Darüber hinaus wurde der Feststoffgehalt des Beschichtungsgemisches so eingestellt, daß unterschiedliche Überzugsdicken resultierten.

In den Beispielen 25 bis 28 wurde anstelle der quartären Ammoniumverbindung aus Beispiel 1 Stearamidopropyldimethyl-beta-hydroxyethyl-ammoniumnitrat (in der Tabelle mit N bezeichnet) im Verhältnis 3:1, bezogen auf das Trokkengewicht, verwendet.

Aus den Angaben in der Tabelle ist ersichtlich, daß der erfindungsgemäße Überzug der Polyesterfolie ausgezeichnete antistatische Eigenschaften verleiht, deren Steigerungsgrad von der Überzugsdicke und dem Verhältnis zwischen den Komponenten im Überzug abhängig ist. Aus den Beispielen 25 bis 28 geht hervor, daß sehr hohe Gehalte des untersuchten Antistatikums aus dem Stand der Technik und sehr große Überzugsdicken erforderlich sind, wenn man Ergebnisse erzielen will, die mit den Ergebnissen bei den erfindungsgemäß hergestellten Folien vergleichbar sind.

TABELLE

| Beispiel | Ansatz | Dicke des Überzugs (Mikrozell) | Oberflächenwiderstand $\Omega$ bei 50% rel. Luftfeuchtigkeit | % reprografische Haftung |
|---|---|---|---|---|
| 2 | Q + A (1,3:1) | 10,4 nm | $3,3 \times 10^{11}$ | 10 |
| 3 | " | 13,7 nm | $1,6 \times 10^{10}$ | - |
| 4 | " | 18,0 nm | $5,0 \times 10^{9}$ | - |
| 5 | " | 15,5 nm | $2,4 \times 10^{9}$ | - |
| 6 | " | 16,8 nm | $1,8 \times 10^{9}$ | 25 |
| 7 | " | 24,4 nm | $1,9 \times 10^{9}$ | - |
| 8 | " | 28,0 nm | $9,5 \times 10^{8}$ | 25 |
| 9 | Q + A (1:1,5) | 25,1 nm | $3,2 \times 10^{9}$ | 60 |
| 10 | " | 33 nm | $2,4 \times 10^{9}$ | 75 |
| 11 | " | 41 nm | $1,8 \times 10^{9}$ | 100 |
| 12 | " | 51,6 nm | $1,2 \times 10^{9}$ | 100 |
| 13 | Q + A (1:2,25) | 26,6 nm | $8,6 \times 10^{9}$ | 70 |
| 14 | " | 32,5 nm | $4,9 \times 10^{9}$ | 85 |
| 15 | " | 38 nm | $2,7 \times 10^{9}$ | 100 |

Fortsetzung TABELLE

| Beispiel | Ansatz | Dicke des Überzugs (Mikrozell) | Oberflächenwiderstand Ω bei 50% rel. Luftfeuchtigkeit | % reprografische Haftung |
|---|---|---|---|---|
| 16 | " | 49 nm | $1{,}9 \times 10^{9}$ | 100 |
| 17 | Q + A (1:3) | 25 nm | $2{,}7 \times 10^{10}$ | 90 |
| 18 | " | 28,5 nm | $2{,}7 \times 10^{10}$ | 100 |
| 19 | " | 34,3 nm | $8{,}9 \times 10^{13}$ | 100 |
| 20 | " | 42,7 nm | $4{,}3 \times 10^{9}$ | 100 |
| 21 | Q + A (1:3,75) | 23 nm | $2{,}7 \times 10^{13}$ | 75 |
| 22 | " | 34,5 nm | $5{,}3 \times 10^{12}$ | 95 |
| 23 | " | 46 nm | $1{,}3 \times 10^{10}$ | 100 |
| 24 | " | 51,8 nm | $1{,}4 \times 10^{11}$ | 100 |
| 25 | N + A (3:1) | 26 nm | $1{,}8 \times 10^{11}$ | 0 |
| 26 | " | 30 nm | $2{,}1 \times 10^{10}$ | 10 |
| 27 | " | 43 nm | $7{,}8 \times 10^{9}$ | 25 |
| 28 | " | 53 nm | $4{,}5 \times 10^{9}$ | 25 |
| Vergleich | - | - | $>10^{16}$ | 0 |

In der Tabelle sind auch die Haftungseigenschaften der erfindungsgemäßen Überzuge im Vergleich mit einer Folie ohne Überzug (Vergleich) und der Folie aus dem Stand der Technik (Beispiele 25 bis 28) angegeben. Der Haftungsversuch wurde mit einem simulierten reprografischen Lack aus 9 Gew.-Teilen Celluloseacetobutyrat ("20-Sekunden"-Qualifität) gelöst in einer Mischung aus 88 Gew.-Teilen Ethylenglykolmonomethylether und 3 Gew.-Teilen Methylethylketon mit Zusatz von Rhodamin B als Farbstoff (3 Gew.-Teile eines 1%igen Rhodamin B in n-Butanol) durchgeführt. Der Lack wurde mit einem mit Draht gewickelten Stab (Mayer Rod Nr. 70) auf die antistatisch überzogene Oberfläche jeder untersuchten Folie aufgebracht und 5 Minuten bei 60°C im Ofen getrocknet. Dann wurde die Beschichtung mit einem Skalpell kreuzweise eingeritzt. Ein Streifen Klebeband (Scotch Nr. 610) wurde auf den kreuzschraffierten Bereich aufgeklebt, mit dem Fingernagel fest angerieben und dann rasch von der Folie abgezogen. Die in dem kreuzschraffierten Bereich zurückbleibende Lackmenge wurde als Prozentanteil der vor dem Abziehen des Klebebandes anwesenden Menge bezeichnet, d.h. kein Lack entfernt = 100% Haftung, der gesamte Lack entfernt = 0% Haftung, wobei dazwischenliegende Haftungswerte als Anteil des noch auf der Folie haftenden Lackbereichs ausgedrückt werden. Der Versuch wurde zweimal an 2 Folienbögen (insgesamt vier Bereiche untersucht) durchgeführt und der Haftungswert als der Wert des Testbereichs angegeben, der das schlechteste Ergebnis brachte.

Ergebnisse mit 95% Haftung oder darunter gelten nach kommerziellen Maßstäben allgemein als nicht annehmbar. Ergebnisse zwischen 95% bis unter 100% gelten als einigermaßen annehmbar, während für eine kommerziell annehmbare Folie Ergebnisse von 100% der angestrebte Normwert sind.

**Patentansprüche**

1. Selbsttragende streckorientierte Folie aus thermoplastischem Kunststoff mit einem dünnen, durchgehenden, antistatischen Überzug auf einer Seite oder auf beiden Seiten, dadurch gekennzeichnet, daß der Überzug aus einer Mischung zusammensetzt ist enthaltend

a) ein quartäres Ammoniumsalz mit der allgemeinen Strukturformel

$$\left[ R - \overset{\displaystyle R}{\underset{\displaystyle R}{\overset{|}{\underset{|}{N^+}}}} - (CH_2)_3 - \overset{\displaystyle R}{\underset{\displaystyle R}{\overset{|}{\underset{|}{N^+}}}} - R' \right] \quad 2X^-$$

in der

R Reste einer niedermolekularen Alkylgruppe mit 1 bis 3 C-Atomen bedeutet,

R' eine Alkyl- oder Alkenylgruppe mit 8 bis 20 C-Atomen bedeutet und

$X^-$ ein Anion ist, und

b) ein polymeres acrylisches oder methacrylisches Bindemittel

und daß der Oberflächenwiderstand der Folie $10^{13}\Omega$ nicht überschreitet.

2. Folie nach Anspruch 1, dadurch gekennzeichnet, daß der Überzug eine Trockendicke im Bereich von 2,54 bis 254 nm aufweist.

3. Folie nach Anspruch 1 oder 2, dadurch gekennzeichnet, daß der antistatische Kunststoff ausgewählt ist aus der Gruppe umfassend Polyester, Polyamid, Polystyrol, Polyethylen, Polypropylen und Polycarbonat.

4. Folie nach einem der Ansprüche 1 bis 3, dadurch gekennzeichnet, daß sie eine biaxial streckorientierte Folie aus Polyethylenterephthalat ist.

5. Folie nach einem der Ansprüche 1 bis 4, dadurch gekennzeichnet, daß der Überzug das quartäre Ammoniumsalz (Komponente a) in einer Menge von 10 bis 80 Gew.-% bevorzugt von 25 bis 75 Gew.-%, und das Bindemittel (Komponente b) in einer Menge von 90 bis 20 Gew.-%, bevorzugt von 75 bis 25 Gew.-%, bezogen jeweils auf das Gesamtgewicht der den Überzug bildenden Mischung, enthält.

6. Folie nach einem der Ansprüche 1 bis 5, dadurch gekennzeichnet, daß in der allgemeinen Strukturformel des quartären Ammoniumsalzes die Reste R Methylgruppen bedeuten und der Rest R' eine Gruppe mit 14 bis 18 C-Atomen, abgeleitet von dem Rest der Talgfettsäure, bevorzugt ist das quartäre Ammoniumsalz N,N,N,N',N'-Pentamethyl-N'-Talgrest-trimethylendiammonium-bis(methylsulfat).

7. Folie nach einem der Ansprüche 1 bis 6, dadurch gekennzeichnet, daß das Bindemittel ein vernetztes acrylisches oder methacrylisches Polymeres oder Copolymeres ist, bevorzugt ein Terpolymer von Methylmethacrylat, Ethylacrylat und bis zu 10 Mol-% Acrylamid, Methacrylamid, N-Methylolacrylamid oder N-Methylolmethacrylamid.

8. Verfahren zur Herstellung einer Folie nach einem der Ansprüche 1 bis 7, bei dem zunächst durch Schmelzextrusion eine amorphe Vorfolie hergestellt wird, welche dann durch Streckung in eine oder zwei Richtungen orientiert und anschließend hitzefixiert wird, dadurch gekennzeichnet, daß der antistatische Überzug aus wäßriger Dispersion vor dem oder zwischen den Streckschritt(en) auf die Folie aufgebracht wird und daß die Folie nach dem Auftragen der wäßrigen Dispersion getrocknet wird.

9. Verfahren nach Anspruch 8, dadurch gekennzeichnet, daß die Folie vor dem Auftragen der antistatischen Beschichtung einer Coronaentladung unterzogen wird.

10. Folie nach einem der Ansprüche 1 bis 7, hergestellt nach den Ansprüchen 8 oder 9 zur Verwendung als Trägerfolie für eine weitere Beschichtung mit Druckfarbe oder mit lichtempfindlichem Material oder als mattierte Zeichenfolie.

**Revendications**

1. Pellicule autoportante orientée par étirage, à base de matière synthétique thermoplastique, comportant sur un côté ou sur les deux un mince revêtement continu antistatique, caractérisée en ce que le revêtement est composé d'un mélange contenant

a) un sel d'ammonium quaternaire de formule développée générale

$$\left[ R - \overset{\displaystyle R}{\underset{\displaystyle R}{\overset{|}{\underset{|}{N^+}}}} - (CH_2)_3 - \overset{\displaystyle R}{\underset{\displaystyle R}{\overset{|}{\underset{|}{N^+}}}} - R' \right] \quad 2X^-$$

dans laquelle

R représente des restes d'un groupe alkyle inférieur ayant de 1 à 3 atomes de carbone,

R' représente un groupe alkyle ou alcényle ayant de 8 à 20 atomes de carbone, et

$X^-$ est un anion, et

b) un liant polymère acrylique ou méthacrylique,

et en ce que la résistance superficielle de la pellicule n'excède pas $10^{13}\Omega$.

2. Pellicule selon la revendication 1, caractérisée en ce que le revêtement a une épaisseur de couche sèche dans la plage de 2,54 à 254 nm.

3. Pellicule selon la revendication 1 ou 2, caractérisée en ce que la matière synthétique thermoplastique est choisie parmi un polyester, un polyamide, un polystyrène, un polyéthylène, un polypropylène et un polycarbonate.

4. Pellicule selon l'une des revendications 1 à 3, caractérisée en ce qu'elle consiste en une feuille de poly(téréphtalate d'éthylène) orientée biaxialement par étirage.

5. Pellicule selon l'une des revendications 1 à 4, caractérisée en ce que le revêtement contient le sel d'ammonium quaternaire (composant a) en une quantité de 10 à 80% en poids, de préférence de 25 à 75% en poids et le liant (composant b) en une quantité de 90 à 20% en poids, de préférence de 75 à 25% en poids, chacun par rapport au poids total du mélange constituant le rèvêtement.

6. Pellicule selon l'une des revendications 1 à 5, caractérisée en ce que, dans la formule développée générale du sel d'ammonium quaternaire, les radicaux R représentent des groupes méthyle et le radical R' représente un groupe ayant de 14 à 18 atomes de carbone, dérivé du reste de l'acide gras de suif, de préférence le sel d'ammonium quaternaire est bis(méthylsulfate) de N,N,N,N',N'-pentaméthyl-N'-reste de suif-triméthylènediammonium.

7. Pellicule selon l'une des revendications 1 à 6, caractérisée en ce que le liant est un polymère ou copolymère acrylique ou méthacrylique réticulé, de préférence un terpolymère de méthacrylate de méthyle, acrylate d'éthyle et jusqu'à 10% en mole d'acrylamide, méthacrylamide, N-méthylolacrylamide ou N-méthylolméthacrylamide.

8. Procédé pour la fabrication d'une pellicule selon l'une des revendications 1 à 7, dans lequel on prépare d'abord par extrusion de masse fondue une feuille préliminaire amorphe, qui est orientée par étirage dans une ou deux directions et ensuite thermofixée, caractérisé en ce que l'on applique sur la feuille le revêtement antistatique à partir d'une dispersion aqueuse avant l'étape d'étirage ou entre les étapes d'étirage, et en ce que l'on sèche la pellicule après l'application de la dispersion aqueuse.

9. Procédé selon la revendication 8, caractérisé en ce que, avant l'application du revêtement antistatique, on soumet la pellicule à une décharge en couronne.

10. Pellicule selon l'une des revendications 1 à 7, fabriquée selon la revendication 8 ou 9, pour utilisation en tant que feuille de support pour un autre revêtement avec de l'encre d'imprimerie ou avec un matériau photosensible, ou en tant que feuille à dessin matée.

**Claims**

1. A self-supporting, stretch-oriented film of a thermoplastic material having a thin, continuous antistatic coating on one or both surfaces, characterized in that said coating is comprised of a mixture of

a) a quaternary ammonium salt having the general structural formula

$$\left[ R - \overset{\displaystyle R}{\underset{\displaystyle R}{\overset{|}{\underset{|}{N^+}}}} - (CH_2)_3 - \overset{\displaystyle R}{\underset{\displaystyle R}{\overset{|}{\underset{|}{N^+}}}} - R' \right] \quad 2X^-$$

where

R is a radical of a lower alkyl group having 1 to 3 carbon atoms;

R' is an alkyl or alkenyl group having 8 to 20 carbon atoms;

$X^-$ is an anion; and

b) a polymeric acrylic or methacrylic binder,

and in that the surface resistivity of the film is not greater than $10^{13}$ ohm.

2. The film as claimed in claim 1, characterized in that said coating has a dry thickness within the range of 2.54 to 254 nm.

3. The film as claimed in claim 1 or 2, characterized in that said thermoplastic material is selected from the group comprising polyester, polyamide, polystyrene, polyethylene, polypropylene and polycarbonate.

4. The film as claimed in any of claims 1 to 3, characterized in that it is a biaxially stretch-oriented polyethylene terephthalate film.

5. The film as claimed in any of claims 1 to 4, characterized in that said coating contains 10 to 80% by weight, preferably 25 to 75% by weight, of the quaternary ammonium salt [component a)] and 90 to 20% by weight, preferably 75 to 25% by weight, of the binder [component b)], each time related to the total weight of the mixture forming said coating.

6. The film as claimed in any of claims 1 to 5, characterized in that in the general structural formula of said quaternary ammonium salt the radicals R denote methyl groups and the radical R' denotes a group having 14 to 18 carbon atoms and being derived from tallow fatty acid, said quaternary ammonium salt preferably being N,N,N,N',N'-pentamethyl-N'-tallow trimethylenediammonium-bis (methyl sulfate).

7. The film as claimed in any of claims 1 to 6, characterized in that said binder is a crosslinked acrylic or methacrylic polymer or copolymer, preferably a terpolymer comprised of methyl methacrylate, ethyl acrylate and up to 10 mole % of acrylamide, methacrylamide, N-methylolacrylamide or N-methylolmethacrylamide.

8. A process for preparing a film as claimed in any of claims 1 to 7 by first producing an amorphous cast film by melt-extrusion, thereafter orienting said cast film by stretching in one or two directions and then heat-setting the oriented film, characterized in that said antistatic coating is applied to said film as an aqueous dispersion prior to stretching or between the individual stretching steps, and in that said film is dried after application of the aqueous dispersion.

9. The process as claimed in claim 8, characterized in that said film is subjected to a corona discharge treatment prior to the application of said antistatic coating.

10. The film as claimed in any of claims 1 to 7, prepared as claimed in claim 8 or 9, for use as a support film for a further coating comprising printing ink or a photosensitive composition or a matte drafting layer.